(19)

Europäisches
Patentamt

European
Patent Office

Office européen
des brevets

(11) **EP 3 836 044 A1**

(12) **EUROPEAN PATENT APPLICATION**

(43) Date of publication:
**16.06.2021 Bulletin 2021/24**

(21) Application number: **20212759.3**

(22) Date of filing: **09.12.2020**

(51) Int Cl.:
***G06Q 10/00*** (2012.01)          ***G06Q 50/26*** (2012.01)
***G01C 21/36*** (2006.01)          ***G06F 16/29*** (2019.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **09.12.2019 EP 19214521**

(71) Applicant: **Parkbob GmbH
1200 Wien (AT)**

(72) Inventors:
• **ADELSBERGER, Christian
1090 Wien (AT)**
• **CIPA, Nilüfer
1150 Wien (AT)**
• **LIEBMANN, Gerhard
1200 Wien (AT)**

(74) Representative: **Stellbrink & Partner
Patentanwälte mbB
Widenmayerstrasse 10
80538 München (DE)**

(54) **METHOD AND SYSTEM FOR ANALYZING PARKING REGULATIONS**

(57)      The present disclosure describes a method and a system for analyzing parking regulations. The method comprises harmonizing data related to parking regulations to obtain a plurality of parking constraints, comparing the parking constrains to obtain a set of compared constraints and sorting the compared constraints to obtain ranked constraints. The system comprises a memory component for storing data related to parking regulations and a processing component comprising a harmonization, constraint analyzing and sorting modules.

```
         ┌─────────────────────────┐
         │          S1             │
         │  Harmonize data related │
         │  to parking regulations │
         │  to obtain a plurality  │
         │  of parking constraints │
         └────────────┬────────────┘
                      │
                      ▼
         ┌─────────────────────────┐
         │          S2             │
         │ Compare parking         │
         │ constraints to obtain   │
         │ a set of compared       │
         │ constraints             │
         └────────────┬────────────┘
                      │
                      ▼
         ┌─────────────────────────┐
         │          S3             │
         │ Sort the compared       │
         │ constraints to obtain   │
         │ ranked constraints      │
         └─────────────────────────┘
```

Fig. 1

**EP 3 836 044 A1**

**Description**

**Field**

The invention relates to parking regulations. More specifically, the invention relates to analyzing street parking regulations or rules.

**Introduction**

Locating street parking can often be challenging for drivers. Particularly in areas where its availability is limited or in unfamiliar areas looking for street parking can take a significant amount of time and effort. Further, vehicles circling an area looking for parking contribute to congestion and pollution. Therefore, it is desirable to facilitate searching for street parking for drivers.

Often, there are various regulations and rules associated with a street parking area. While some might be general rules applying to an area (such as a neighborhood or a city), others might be explicitly indicated with signs in the vicinity of the particular parking spots. Often, multiple regulations apply to the same parking spot. Drivers new to an area or visiting it might not be familiar with the general regulations concerning street parking even in the absence of further specific regulations.

There has been some effort to facilitate dealing with street parking regulations in the art. For instance, US patent application 2006/0106504 A1 discloses an apparatus and a system for determining compliance with parking rules by a vehicle, and also a mobile vehicle observing means for providing data for determining the position of a parked vehicle and a device for obtaining parking information for a vehicle. Similarly, US patent application US 2011/0140927 A1 discloses a method and apparatus for assisting drivers to park responsibly and to honor posted parking rules and regulations.

Better and more streamlined methods of facilitating street parking by assessing its permissibility based on regulations are needed.

**Summary**

It is the object of the present invention to disclose ways of comparing and analyzing street parking regulations. It is also the object of the present invention to facilitate assessing street parking permissibility based on applicable regulations. It is also an object of the present invention to facilitate and expedite street parking for vehicles. It is further the object of this disclosure to provide robust and accurate way of quantifying parking rules and regulations.

In a first embodiment, a method for analyzing parking regulations is disclosed. The method comprises harmonizing data related to parking regulations via a data harmonization module to obtain a plurality of parking constraints. The method further comprises comparing the parking constraints via a constraint analyzing module to obtain a set of compared constraints. The method also comprises sorting the compared constraints via a sorting module to obtain ranked constraints.

The parking regulations may refer to rules or laws for street parking. It may be beneficial to provide a method of analyzing them in order to determine whether street parking is allowed at a given place at a certain time. This analysis may also allow to determine which parking constraints would have priority at a given time and place. To achieve this, data related to parking regulations may first be collected. Such data may comprise images of street parking signs, municipality or city regulations, or similar such data.

The parking constraints, which may be obtained from the data related to parking regulations, can comprise, for example, a set of objects with certain parameters. As an example, the parking constraints may be expressed as vectors and/or matrices. It can be useful to translate all of the various data related to parking regulations into a consistent set of parking constraints, since this can allow further analysis of parking allowability.

Comparing the parking constrains can include algorithms such as machine learning algorithms trained on a subset of already compared constraints, and thereby learning to determine the priority and compatibility of the constraints. This can advantageously allow to build a consistent framework to consider the parking constraints that may apply on one geographical area.

Sorting the ranked constraints may comprise determining which ones of them apply at a given time in a given place.

The present method for analyzing parking constraints can be used as part of many varied applications. For instance, analyzing parking constraints can yield data that can be used to identify street parking spots where parking is permissible at a given time and day. This can be used by drivers, driver assistant systems integrated into a vehicle or provided as independent software. Additionally, the present method can advantageously allow self-driving cars to identify and navigate towards allowable street parking at any given time and location.

In some embodiments, the method can further comprise receiving a query related to parking permissibility and outputting ranked constraints indicative of parking permissibility based on said query. That is, a request or an inquiry may come in from a third party wishing to know whether parking is allowed in a certain area or time, and it may be answered by outputting the appropriate ranked constraints. If no constraints apply, this can also be outputted. This can advantageously allow third party providers or drivers to gain information regarding street parking in a certain area.

In some embodiments, the method can further comprise the step of assembling data related to parking regulations and storing it in a memory component. This can allow to keep this data for further use or further analysis. The memory component may comprise a local data storage device such as a hard drive and/or a cloud storage component or similar. The parking constraints extracted from the data related to parking regulations may be stored in the same or different memory component.

In some embodiments, each parking constraint can comprise geographical area data where it applies and the comparing and sorting can be performed at least in part based on the geographical area data where the constraints apply. In other words, each parking constraint may have a parameter indicating which location the constraint is associated with. This can correspond to a street, a neighborhood, a city or similar.

In some embodiments, harmonizing can further comprise converting data related to parking regulations into a unified format. That is, different data can be converted into a single framework. This can mean, for instance, extracting information from a picture of a parking sign and inputting this information into a predefined vector or array.

In some embodiments, harmonizing can further comprise extracting a plurality of parking constraints from data related to parking regulations. Parking constraints can refer to information on allowability of parking that comprise an associated temporary and location parameters. For example, parking constraint may be of a form of a vector and/or an array with coordinates where the constraint applies and time where it applies encoded in binary form. Other mathematical expressions of parking constraints are also possible. Extracting parking constraints from data related to parking regulations may comprise a plurality of algorithms run on this data. For example, text recognition algorithms may be run, or the data may be converted from textual into numerical form.

In some such embodiments, each parking constraint can comprise at least one of a geometrical description of area where the constraint applies; a time interval during which the constraint applies; one or more days on which the constraint applies; a type of constraint; a source of constraint; a category of constraint source; and a unique ID associated with the constraint.

The geometrical description of the area where the constrain applies may refer to a coordinate representation of a street, neighborhood and/or city where the constraint may apply. Assigning a common coordinate system (that can, for example, be based on GPS coordinates, street maps and/or other such tools) can be important to compare the constraints in a consistent manner.

The type of constrain may refer to constraint for specific types of vehicles (such as parking forbidden for cars exceeding particular size). This can be an important qualifier for an optional method step of outputting parking permissibility for example. In some embodiments, the type of constraint can be indicative of what type of vehicle is allowed to park as per the constraint. For example, delivery vehicles might be allowed to park, while other vehicles might not be,

The source of the constraint might refer to, for example, information that the constraint originates from a street parking sign. This can be important for keeping track of the constraints and of their priority with respect to each other. For example, a constraint that originates form general guidelines on parking might have a lower priority than the one originating from a street parking sign at the given location.

The parking constraint itself can be expressed as a mathematical object such as a vector and/or an array. The different parameters such as the geometrical description, time interval, type of constraint and others can comprise entries into the vector and/or array. That is, one entry of a vector or an array can comprise geographical coordinates expressed as numbers (in reference to either one of the standard coordinate systems such as latitude and longitude and/or a proprietary coordinate system for parking constraint analysis). Another entry can comprise a time interval where the constraint can apply and so on.

In some embodiments, comparing parking constraints can be done pairwise. That is, the set of all constraints might be compared in such a way that only two constraints are compared simultaneously. In other words, each unique pair of parking constraints might be compared. This can allow for a consistent and efficient comparing algorithm.

In some embodiments, comparing parking constraints can comprise outputting, for each pair of distinct parking constraints, one of a limited number of distinct outputs. That is, each pair of parking constraints can be evaluated, and a certain result can be output. In some such embodiments, the distinct outputs can be indicative of the parking constraints' pairwise relationship.

In some such embodiments, the distinct outputs can comprise incompatibility between the two compared parking constraints, a relative higher priority of a first compared parking constraint with respect to a second compared parking constraint, a relative lower priority of a first compared parking constraint with respect to a second compared parking constraint; and an equal priority of two compared parking constrains.

An incompatibility between the constrains may indicate that there is no time interval and/or geographical area where both parking constraints apply. Additionally or alternatively, one or both constraints can apply to a specific type of vehicle.

A relative higher priority of one constraint may indicate that this constraint would overrule the other one. For example, parking rules listed on a street parking sign might have a higher priority than general street parking rules applying in a given jurisdiction.

In some such embodiments, incompatibility between the two compared constraints can be outputted when the two compared parking constraints satisfy at least one of the conditions as follows. There may be an absence of substantial intersection in areas where each of the two parking constraints is valid, absence of substantial time interval during which both parking constraints apply, absence of day on which both parking constraints apply, and incompatibility of constraint type.

In some embodiments, the set of compared constraints can comprise pairwise compared parking constraints with an output other than incompatibility between the two. That is, pairs of constraints that are not compatible, and therefore cannot be ranked with respect to each other may be discarded from the set of compared constraints, since they would have no interaction.

In some embodiments, comparing the constraints can comprise determining whether there is intersection between the geographical areas where they apply. This intersection can represent, for example, a street where a pair of constraints would both apply. The street can be expressed as a line segment and/or a vector in a coordinate system representing layout of the streets and neighbourhoods.

In some embodiments, comparing the constraints can further comprise running a machine learning algorithm on the parking constraints. That is, a training set comprising a selection of constraint pairs may be used to train an algorithm, followed by the algorithm comparing the remaining constraints on its own. The training set may be generated by an authorized person and/or also be created via (or at least with assistance of) another machine learning algorithm.

In some such embodiments, the method can further comprise building a function f taking any two parking constraints as inputs and outputting a relationship between the two constraints. The function f may comprise a limited number of distinct possible outputs. The function f for a pair of parking constraints might be evaluated via a machine learning algorithm, with one of a limited number of possible relationships between the two constraints outputted as a result. There may further be a certain likelihood or confidence associated with the output of the algorithm.

In some such embodiments, the method can further comprise selecting a predetermined number of parking constraint pairs to train the machine learning algorithm. As mentioned above, this training set can be created from a subset of a set of parking constraints and used to train the algorithm to correctly identify the relationship between the two compared parking constraints.

In some such embodiments the method can further comprise testing the machine learning algorithm to determine whether the training set of constraint pairs allows for comparison of all of the constraints via the machine learning algorithm. The testing can also comprise a quality assurance, where the comparison results of the parking constraints can be verified and it can be determined whether the algorithm outputs correct results. This can be repeated as needed to improve the algorithm. A larger training set may be used to retrain the algorithm and/or different parameters can be adjusted if the comparison results are not accurate enough.

In some embodiments, sorting the compared constraints can comprise assigning a ranking to each constraint. That can advantageously allow to determine which constraint would have priority over the others. The ranking can be based on the output of the comparing module, where the constraints can be preferably compared pairwise. The ranking can reflect which constraint would have priority at a given time at a given geographical location. For example, one street can have multiple parking regulations applying on it. There can be city-wide street parking regulations, a dedicated street parking sign, and a temporary construction related sign all applying on the same interval. In this case, the ranking would determine that the construction sign has the highest priority, followed by the regular street parking sign, followed by the default city regulations.

In some such embodiments, the ranking can be assigned between constraints with an intersection between their geographical areas. That is, the ranking may be assigned relative to other constraints with which a given constraint has a relationship. In a specific embodiment where the constraints are compared pairwise, and an output may indicate incompatibility between the constraints, and equal priority and a relative higher priority of one of them, the ranking may be assigned in such a way that only pairs with an output different from incompatibility are ranked.

In some embodiments, sorting the compared constraints can further comprise the steps of selecting a geographical region of interest and retrieving all compared constraints applying in the geographical region of interest. In other words, the compared constraints may also be sorted based on the area where they apply. This can be advantageous, since it can be easier and more efficient to verify whether street parking is allowed in a particular area if the constraints are sorted based on the different areas.

In some such embodiments, the method can further comprise the step of outputting a map of a geographical region comprising parking permissibility throughout the region. The map may be time-dependent. Advantageously, such an output can allow users or third parties to quickly and in real time view whether parking is allowed in certain areas of interest.

In some such embodiments, outputting the map can further comprise assigning time data to the sorted constraints to generate a time-dependent map of parking permissibility throughout the region. Note, that the time data may also be already assigned to the sorted constraints during the comparing and/or sorting step.

In some embodiments, the method can further comprise the step of receiving a query related to parking permissibility via a vehicle processing component, responding to said query based on the ranked constraints, and guiding a vehicle user to permissible parking based on the ranked constraints. In other words, a user or a processing system of a vehicle may wish to inquire whether parking is permitted in a certain area. They can then send a query that can be answered by using the sorted parking constraints and the query parameters. Advantageously, this can allow a user and/or a third party device to determine whether street parking is allowable in a certain street or neighborhood of interest.

In some such embodiments, the method can further comprise forecasting vehicle arrival time to a specified area and directing the vehicle user to permissible parking based on the forecasted arrival time and the specified area. That is, upon receiving a query related to parking permissibility, it can be estimated when a vehicle associated with said query will arrive at the area of interest (which may be indicated as a destination in the query). This estimated arrival time can then be used to determine, based on the ranked parking constraints, whether street parking of said vehicle would be permissible in the vicinity of the destination. The vehicle can then be directed towards an area where such parking would be permissible. This can be particularly advantageous both to direct users of a vehicle to allowable parking, as well as self-driving cars to street parking according to local regulations.

In a second embodiment, a computer-implemented system configured for analyzing parking regulations is disclosed. The system comprises a memory component configured for storing at least data related to parking regulations and a processing component. The processing component comprises a harmonization module configured to output a plurality of parking constraints by harmonizing data related to parking regulations. The processing component also comprises a constraint analyzing module configured to output a set of compared constraints by comparing the parking constraints. The processing component further comprises a sorting module configured to output ranked constraints by sorting the compared constraints.

The system may be implemented on a server, on a plurality of servers and/or on a cloud server. It can be local and/or distributed.

The memory component may refer to a data storage device such as a hard drive or similar or to virtual storage such as cloud storage.

The processing component can generally refer to a device with computing resources. This can comprise a processor or computing resources accessed remotely.

Modules may refer to blocks of computing executed to obtain a certain intermediate result as an output. They can also be referred to as subroutines or algorithms.

In some embodiments, each parking constraint can comprise geographical area data where it applies. The comparing and sorting can be performed at least in part based on the geographical area data wherein the parking constraints apply. That is, each area such as a neighborhood, city or district can be evaluated separately to process the parking constraints applying there.

In some embodiments, each parking constraint can comprise at least one of the following parameters. These can include a geometrical description of area where the constraint applies, a time interval during which the constraint applies, one or more days on which the constraint applies, a type of constraint, a source of constraint, a category of constraint source and a unique ID associated with the constraint. These parameters are also described above in relation to the method embodiment.

In some embodiments, the processing component can be further configured to run a machine learning algorithm on a set of parking constraints to compare them. The machine learning algorithm can be part of one of the modules, preferably the comparing module. Advantageously, using a machine learning algorithm can allow to automate at least part of the analyzing of the parking constraints, such as comparing them.

In some embodiments the processing component can be further configured to train the machine learning algorithm with a subset of pairs of parking constraints. The subset of pairs of parking constraints may also be stored in a memory component.

In some such embodiments, the system can further comprise a user terminal. The user terminal can be configured to communicate with the processing component. The user terminal and the processing component can be configured to exchange data related to parking permissibility at a specified geographic area. That is, the user terminal can be used to send queries relating to parking permissibility to the processing component. The processing component can output a reply to such queries by using the sorted parking constraints and the parameters of the query.

The processing component can be further configured to execute the method for assessing parking permissibility according to any of the preceding method embodiments.

The present invention is also defined by the following numbered embodiments.

M1. A method for analyzing parking regulations, the method comprising the steps of harmonizing data related to parking regulations via a data harmonization module to obtain a plurality of parking constraints; and comparing the parking constraints via a constraint analyzing module to obtain a set of compared constraints; and sorting the compared constraints via a sorting module to obtain ranked constraints.

M2. The method according to the preceding embodiment further comprising receiving a query related to parking permissibility and outputting ranked constraints indicative of parking permissibility based on said query.

M3. The method according to any of the preceding embodiments further comprising the step of assembling data related to parking regulations and storing it in a memory component.

M4. The method according to any of the preceding embodiments wherein each parking constraint comprises geographical area data where it applies and wherein the comparing and sorting is performed at least in part based on the geographical area data where the constraints apply.

**Embodiments related to harmonizing data (or importing data)**

M5. The method according to any of the preceding embodiments wherein the step of harmonizing further comprises converting data related to parking regulations into a unified format.

M6. The method according to any of the preceding embodiments wherein the step of harmonizing further comprises extracting a plurality of parking constraints from data related to parking regulations.

M7. The method according to the preceding embodiment wherein each parking constraint comprises at least one of the following

a geometrical description of area where the constraint applies;

a time interval during which the constraint applies;

one or more days on which the constraint applies;

a type of constraint;

a source of constraint;

a category of constraint source; and

a unique ID associated with the constraint.

M8. The method according to the preceding embodiment wherein the type of constraint is indicative of what type of vehicle is allowed to park as per the constraint.

**Embodiments related to comparing parking constraints (or logic extraction)**

M9. The method according to any of the preceding embodiments wherein comparing parking constraints is done pairwise.

M10. The method according to any of the preceding embodiments wherein comparing parking constraints comprises outputting, for each pair of distinct parking constraints, one of a limited number of distinct outputs.

M11. The method according to the preceding embodiment wherein the distinct outputs are indicative of the parking constraints' pairwise relationship.

M12. The method according to any of the two preceding embodiments wherein the distinct outputs comprise

Incompatibility between the two compared parking constraints;

A relative higher priority of a first compared parking constraint with respect to a second compared parking constraint;

A relative lower priority of a first compared parking constraint with respect to a second compared parking constraint; and

An equal priority of two compared parking constrains.

M13. The method according to the preceding embodiment wherein incompatibility between the two compared constraints is outputted when the two compared parking constraints satisfy at least one of

Absence of substantial intersection in areas where each of the two parking constraints is valid;

Absence of substantial time interval during which both parking constraints apply;

Absence of day on which both parking constraints apply; and

Incompatibility of constraint type.

M14. The method according to any of the two preceding embodiments wherein the set of compared constraints comprises pairwise compared parking constraints with an output other than incompatibility between the two.

M15. The method according to any of the preceding embodiments and with the features of embodiment M4 wherein comparing the constraints comprises determining whether there is intersection between the geographical areas where they apply.

M16. The method according to any of the preceding embodiments and with the features of embodiment M9 wherein comparing the constraints further comprises running a machine learning algorithm on the parking constraints.

M17. The method according to the preceding embodiment further comprising building a function f taking any two parking constraints as inputs and outputting a relationship between the two constraints.

M18. The method according to any of the two preceding embodiments further comprising selecting a predetermined number of parking constraint pairs to train the machine learning algorithm.

M19. The method according to the preceding embodiment further comprising testing the machine learning algorithm to determine whether the training set of constraint pairs allows for comparison of all of the constraints via the machine learning algorithm.

**Embodiments related to sorting compared constraints (or ranking assignment))**

M20. The method according to any of the preceding embodiments wherein the step of sorting the compared constraints comprises assigning a ranking to each constraint.

M21. The method according to the preceding embodiment and with the features of embodiment M4 wherein the ranking is assigned between constraints with an intersection between their geographical areas.

M22. The method according to any of the preceding embodiments and with the features of embodiment M4 wherein sorting the compared constraints further comprises the steps of

selecting a geographical region of interest; and

retrieving all compared constraints applying in the geographical region of interest.

M23. The method according to any of the two preceding embodiments further comprising the step of outputting a map of a geographical region comprising parking permissibility throughout the region.

M24. The method according to the preceding embodiment wherein the map is time-dependent.

M25. The method according to any of the two preceding embodiments wherein outputting the map further comprises assigning time data to the sorted constraints to generate a time-dependent map of parking permissibility throughout the region.

M26. The method according to any of the preceding method embodiments further comprising the step of

receiving a query related to parking permissibility via a vehicle processing component;

responding to said query based on the ranked constraints; and

guiding a vehicle user to permissible parking based on the ranked constraints.

M27. The method according the preceding embodiment further comprising

forecasting vehicle arrival time to a specified area; and

directing the vehicle user to permissible parking based on the forecasted arrival time and the specified area.

S1. A computer-implemented system configured for analyzing parking regulations, the system comprising

a memory component configured for storing at least data related to parking regulations; and

a processing component comprising

a harmonization module configured to output a plurality of parking constraints by harmonizing data related to parking regulations; and

a constraint analyzing module configured to output a set of compared constraints by comparing the parking constraints; and

a sorting module configured to output ranked constraints by sorting the compared constraints.

S2. The system according to the preceding embodiment wherein each parking constraint comprises geographical area data where it applies and wherein the comparing and sorting is performed at least in part based on the geographical area data wherein the parking constraints apply.

S3. The system according to any of the preceding system embodiments wherein each parking constraint comprises at least one of the following

a geometrical description of area where the constraint applies;

a time interval during which the constraint applies;

one or more days on which the constraint applies;

a type of constraint;

a source of constraint;

a category of constraint source; and

a unique ID associated with the constraint.

S4. The system according to any of the preceding system embodiments wherein the processing component is further configured to run a machine learning algorithm on a set of parking constraints to compare them.

S5. The system according to the preceding system embodiment wherein the processing component is further configured to train the machine learning algorithm with a subset of pairs of parking constraints.

S6. The system according to the preceding embodiment further comprising a user terminal.

S7. The system according to the preceding embodiment wherein the user terminal is configured to communicate with the processing component.

S8. The system according to any of the two preceding embodiments wherein the user terminal and the processing component are configured to exchange data related to parking permissibility at a specified geographic area.

S9. The system according to any of the preceding system embodiments wherein the processing component is configured to execute the method for assessing parking permissibility according to any of the preceding method embodiments.

The present technology will now be discussed with reference to the accompanying drawings.

**Brief description of the drawings**

Figure 1 depicts a schematic embodiment of a method for assessing parking permissibility according to an aspect of the present invention;

Figure 2 schematically depicts a system for assessing parking permissibility according to one aspect of the present invention;

Figure 3 schematically shows a process of obtaining a prioritization of parking regulations;

Figure 4 shows schematic components of a constraint analyzing module for comparing parking constraints;

Figure 5 shows an exemplary depiction of building a function for quantitively comparing parking constraints; and

Figure 6 shows schematic components of a sorting module for prioritizing parking constraints.

**Description of embodiments**

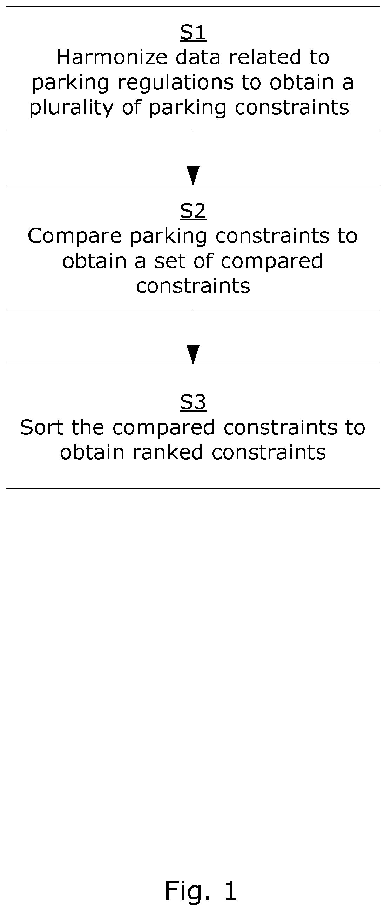

Figure 1 schematically depicts an embodiment of a method for assessing parking permissibility according to one aspect of the present invention. The invention is preferably implemented as a collection of steps, preferably implemented by a plurality of modules or sub-routines of an overall algorithm. Parking regulation data from various databases or other sources forms an input, and a set of ranked parking constraints (corresponding to quantitative representations of parking regulations) is output. This can be done for a specific geographical area (such as a street or a neighborhood) either automatically, or if specifically requested by a user. The set of ranked parking constraints can then be used for various applications. One preferred application comprises providing a user terminal (such as an app or another interface) where a user can request to see parking permissibility during a specific time interval in a specific geographic area. Another preferred application can comprise providing the set of ranked parking constraints as a backbone for a system automatically directing a user towards a specific geographic area for street parking. For example, inbuilt vehicle computing systems can be equipped with such a backbone. These applications are disclosed in detail in the applicant's further patent applications.

In a first step, S1, data related to parking regulations is harmonized. This data can be provided by a plurality of databases, publicly available resources, commercial data, visual data (such as aerial or ground-based imagery), or further sources. All of the data related to parking regulations can be stored in a memory component (such as a physical and/or a cloud based separate database) for easy access. The data can be harmonized via a harmonization module.

The output can comprise a plurality of parking constraints. Harmonization of the data can refer to several things. As the data relating to parking regulations can be provided in many different formats, it needs to first be converted into a single framework allowing for comparison.

Each separate parking regulation is converted into at least one parking constraint (or condition). Each constraint preferably comprises a geometrical description of space where it applies. In other words, geographical area where the condition applies can be translated into geometrical description. This can be done by assigning coordinates to a geographical area and assigning a certain interval and/or area to each constraint on these coordinates. In other words, a map or a similar representation of a geographical area can be projected onto a certain coordinate system.

Each constraint preferably further comprises a time interval during which it applies. Further, each condition preferably comprises type of dates on which it applies (such as working days, holidays, weekends, days with game played at a nearby stadium etc).

Each constraint also preferably comprises a type of rule that the constraint constitutes. For instance, this can refer to rules such as "parking forbidden", "disabled parking", "delivery only", "public transport", "street cleaning", or other similar types of rules.

Furthermore, each constraint also preferably comprises a type or an attribute (such as general regulations in a city, traffic codex, traffic signs etc). Preferably also a category of each source is given (the category can comprise "general parking regulations", "signs", "temporary sings" and so on).

Finally, each constraint is preferably assigned a unique ID.

Once the data is harmonized via a harmonization module, a plurality of parking constraints are output. The parking constraints are preferably defined within a single framework, so that comparison is possible.

In step S2, the parking constraints are compared via a constraint analyzing and training module. The output comprises a set of compared constraints. Comparing is preferably performed pairwise. Preferably, a function f is built for comparing the constraints in a coherent and structured manner. This is further detailed below.

In step S3, the compared constrains are sorted via a sorting (or ranking) module. The output comprises ranked constraints. The ranked constraints include an internal hierarchy between parking constraints applying on a specific spot, area or region. In other words, conflicting parking constraints are consistently ranked. This is similarly further detailed below.

An optional step S4 can also be part of the method in some embodiments (not shown in the figure). In step S4, the ranked constraints can be outputted based on a query related to parking permissibility. The ranked constraints may first be further processed and/or imported to a database that can be accessed via a query. The query can originate, for example, from a user terminal or a similar interface. The query can request information on parking allowability in a certain area, such as a street or a block. Further, the query can comprise a specific time or time interval during which parking allowability should be verified.

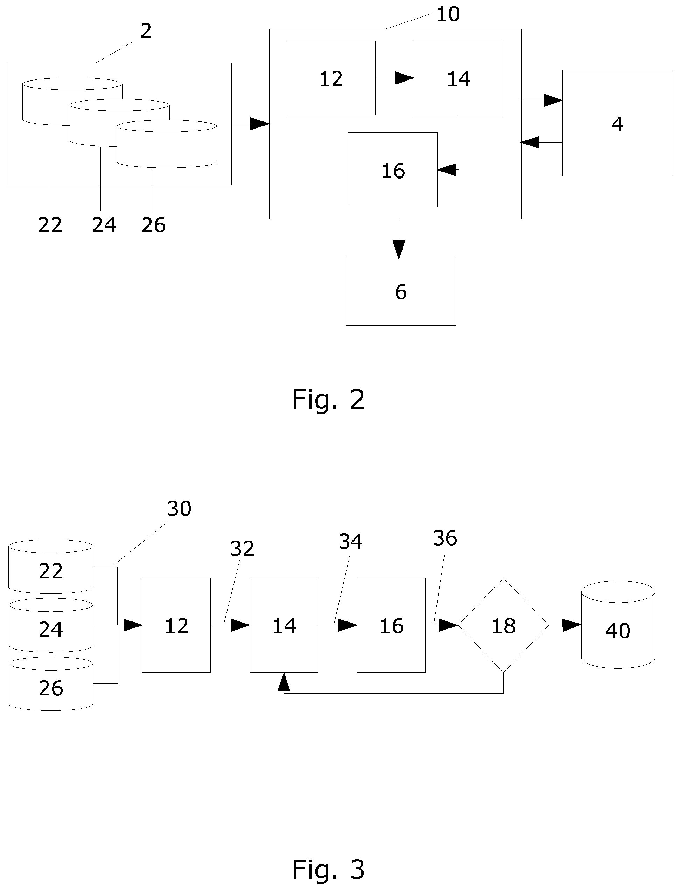

Figure 2 schematically depicts one embodiment of a system for analyzing parking constraints according to one aspect of the invention. The system comprises a memory component 2. The memory component can comprise a database, a physical storage component such as a hard drive, distributed storage such as cloud storage or similar. The memory component can refer to both hardware and software configuration of data storage. The memory component 2 can comprise a plurality of databases 22, 24, 26. Additionally or alternatively, the memory component 2 can comprise data copied from these databased. The databases 22, 24, 26 can comprise parking regulations in various data forms. For example, one database can comprise laws regarding street parking in a particular jurisdiction in text format. Another database can comprise images taken of street or parking signs with an associated location. This database can comprise geotagged images.

The system also comprises a processing component 10. The processing component 10 can comprise a server, a plurality of servers, cloud servers or a local computing device. The processing component 10 can refer both to hardware and software components. The processing module 10 is configured to receive data from the memory component 2. The data is preferably data related to parking regulations.

The processing component 10 comprises a harmonization module 12, a constraint analyzing module 14, and a sorting module 16. The harmonization module 12 is configured to convert all of the data related to parking regulations into a consistent format. This is done by extracting parking constraints from the separate parking regulations or rules. The input of the harmonization module 12 preferably comprises data related to parking regulations (that is, data in different formats and generally from different sources). Its output preferably comprises parking constraints (or conditions which reflect the parking regulations).

The constraint analyzing module 14 is configured to compare the constraints to each other to obtain relationships between the different constraints. This can preferably be done by building a function for pairwise comparing the constraints in a consistent manner. The input of the constraint analyzing module 14 preferably comprises parking constraints. The output preferably comprises compared constraints. In other words, the output reflects relationships between the parking constraints.

The sorting module 16 is configured to sort or rank the compared constraints. That is, the sorting module 16 determines the priority between different parking constraints. This can preferably be done for a particular location or region, but can also be performed for all of the available geographical area simultaneously. The input of the sorting module preferably comprises compared constraints. The output preferably comprises ranked constraints. In other words, the output reflects the hierarchy between the compared constraints.

Optionally, the system can also comprise a user terminal 4. The user terminal can be used to communicate with the processing component 10. For example, a query can be sent from the user terminal 4 to the processing component 10. In response, the processing component 10 can return parking permissibility for a specific region to the user terminal. That is, the processing component 10 can use the output of the sorting module 16 to obtain the hierarchy of parking constraints applying in a specific location or region, and send this information back to the user terminal 4. The information can be sent in a graphic format, such as a map with different colours or symbols representing permissible street parking spaces. The information can also be sent in other formats, such as a textual notification stating whether parking is permissible.

Also optionally, the system can comprise an output terminal 6. The output terminal can be used to further process and analyze the ranked constraints outputted by the sorting module 16. The user terminal 4 can optionally also be connected to the system via the output terminal 6. The output terminal 6 can further be used for other applications. For instance, it can be accessed by a vehicle processing component such as an on-board vehicle computer. The vehicle can then direct its user towards allowable parking spaces.

Figure 3 depicts another schematic embodiment implementing a method according to an aspect of the invention. Data relating to parking regulations 30 is supplied by databases 22, 24, 26. The databases can be part of the memory component (not depicted in the present figure), or they can be various other databases (optionally, the data from the databases 22, 24, 26 is first stored in the memory component). Harmonizing module 12 receives data relating to parking regulations 30. Upon harmonizing this data, the harmonizing module 12 outputs parking constraints 32. The parking constraints 32 then serve as inputs to constraint analyzing module 14. The constraint analyzing module 14 outputs compared constraints 34. The compared constraints 34 are input to sorting module 16, which proceeds to rank them, thereby obtaining ranked constraints 36. Then, quality control module 18 verifies that the ranked constraints fulfill certain quality criteria (for example, that all constraints have been ranked, that the ranking is internally consistent or others). If this is not the case, the quality control module 18 indicates that the constraint analyzing module 14 should be run again, followed by a repeated run of the sorting module 16. If quality criteria are met, the ranked constraints 36 are stored in a ranked constraints database 40. Further processing can be performed with the ranked constraints database 40 and its contents.

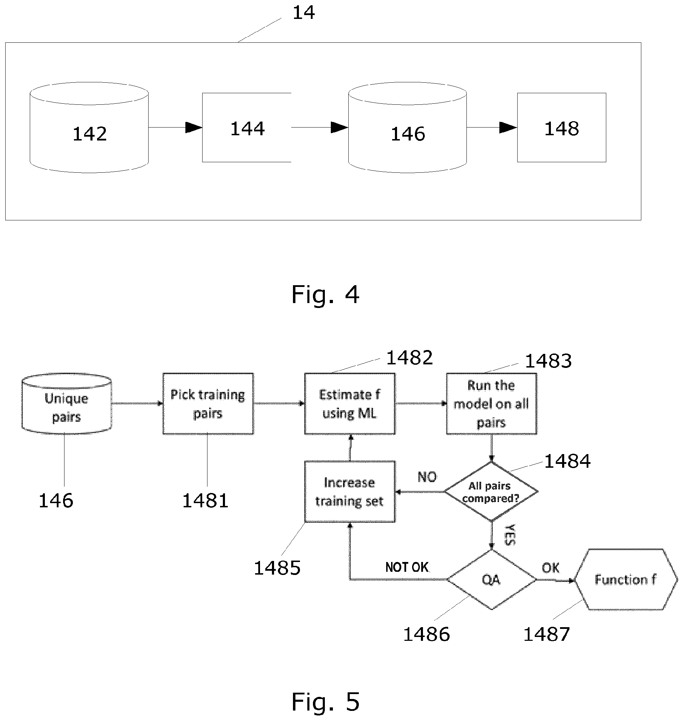

Figure 4 depicts the constraint analyzing module 14 in more detail. The constraint analyzing module 14 is used to extract logic from the parking conditions that have been converted into a unified format. In other words, the constraint analyzing module 14 can determine which parking constraints should be compared and how this comparison can be done. One preferred implementation of this process is to build a function f taking any two parking constraints a and b from a set of all parking constraints as variables, and outputting a limited number of possible results of comparing a and b. This can be, for example as follows.

Suppose $a, b \in C$, where $C$ is the set of all parking constraints extracted from data related to parking regulations. Then, function f can be defined as follows.

$f(a, b) = NA$ *if a and b are incompatible*

$f(a, b) = 1$ *if a has higher priority than b*

$f(a, b) = -1$ *if b has lower priority than a*

$f(a, b) = 0$ *if a and b has the same priority*

Incompatibility of a and b can arise from different factors. For one, the geographical regions where a and b apply may not have substantial intersection (where a substantial intersection can be defined as intersection above a certain minimum size, such as above a square meter for example, or it can be defined as having at least one common point). Further, a and b may be incompatible if there is no substantial time interval during which both apply (similarly, substantial time interval can refer to an interval of at least 1 minute or so). There may also be further reasons why a and b are incompatible, in which case they need not be compared and ranked later on. A more detailed overview of the constraint analyzing module follows. Once parking constraints 32 (not depicted in the present figure) are input to the constraint analyzing module 14, they can be referred to as input constraints 142. The input constraints 142 are then paired as part of a constraint pairing submodule 144. The constraint pairing submodule 144 simply verifies whether the function f is defined for each possible pair of constraints a, b from the set C. The pairs for which the function f is defined then form the basis for a set of unique constraint pairs 146. This set 146 can be represented as

$$P = \{(a,b): a \in C, b \in C, f(a,b) \neq NA\}$$

In one preferred embodiment, set P comprises the pairs of constraints (a,b) which have intersecting regions where they apply, and intersecting time intervals during which they apply. Note, that duplicate pairs are preferably removed from set P. Some further pairs may be removed if there are further reasons for why certain constraints are incompatible, even though they may have intersecting geometries and time intervals where they apply, i.e., even though the function f is defined for them.

Once the set of unique constraint pairs 146 is generated, it can be used to build the function f. This can be done manually, by inputting appropriate values for each unique pair (a,b) and using symmetries of the function (such as f(a,b)=-f(b,a)), or, preferably, this can be done via machine learning techniques, as described in relation to figure 5.

Figure 5 depicts an exemplary embodiment of building function f, which can be used to compare the parking constraints pairwise to each other. Unique constraint pairs 146 can be used to select some training pairs 1481. Based on the training pairs 1481, function f can be estimated using machine learning techniques in 1482. In 1483, the estimated model is run on all unique constraint pairs 146. This is followed by a pairs comparison completion verification 1484. If not all pairs were successfully compared, the training set is increased in 1485. If all of the unique pairs 146 were successfully compared, comparison quality control 1486 can be run to verify whether function f is consistent and whether the comparison has been correctly implemented. If this is not the case, the training set can also be increased as per 1485. If quality control 1486 is successfully passed, the resulting estimated model is accepted and confirmed as function f in 1487.

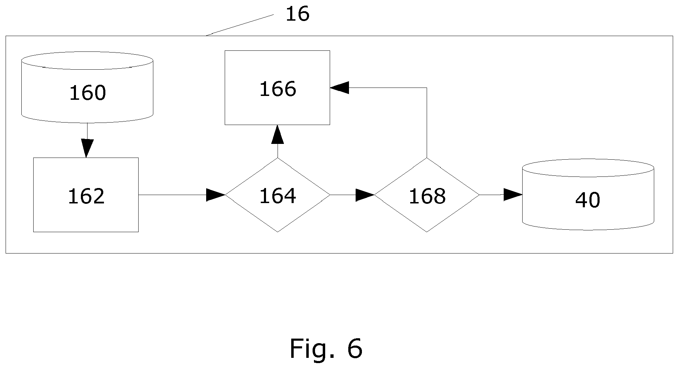

Figure 6 depicts the sorting module 16 in further detail. The sorting or ranking module 16 serves to assign a ranking to each constraint from the set C of parking constraints. The ranking is preferably a natural number that describes the priority of the condition. That is, the condition with the highest ranking for a given time can in the end be delivered to an end user as indicative of whether parking is permissible. The sorting module 16 is preferably run separately for each geographical area or region, that is, for each geometry present in the set of all parking constraints. However, the sorting module 16 can also run over an overall area formed by many overlapping or not regions with different parking regulations.

The compared parking constraints 34 obtained as part of the constraint analyzing module 14 are input into the sorting module 16 as input compared constraints 160. Then, linear programming assignment submodule 162 is run. It is used to assign a ranking to each constraint from set C. An exemplary overview of implementing this follows.

Denote $G = \{a_1,...,a_n\}$ the set of constraints that applies on some region or geometry (such as a street, a particular spot, a block, or similar). Denote $D = \{(a_i, a_j): 1 \leq i,j \leq n; a_i, a_j \in G\}$. The set $D$ then contains $n^2$ pairs of constraints. Using this notation, ranking for each condition from the set G can be obtained by the following steps.

1. Using the trained function $f$, divide the set $D$ into pairwise disjoint sets

$$U = \left\{u_k = \left(a_i, a_j\right) \in D: f\left(a_i, a_j\right) = NA\right\}$$

$$V = \left\{v_k = \left(a_i, a_j\right) \in D: f\left(a_i, a_j\right) = 0\right\}$$

$$W = \left\{w_k = \left(a_i, a_j\right) \in D: f\left(a_i, a_j\right) \in \{-1,1\}\right\}$$

Then, $U \cup V \cup W = D$. Further denote $n_U$ the number of elements of the set $U$, $n_V$ the number of elements of the set $v$, and $n_W$ the number of elements of the set $W$.

2. Build a matrix $N$ such that

$$(N)_{k,i} = 1, (N)_{k,j} = -1 \ for \ each \ v_k = \left(a_i, a_j\right) \in V$$

$$(N)_{k,i} = 0 \ otherwise.$$

The matrix $N$ then has $n_V$ rows and n columns.

3. Build a matrix $M$ such that

$$(M)_{k,i} = f(a_i, a_j), \ (M)_{k,j} = f(a_j, a_i) \ for \ each \ w_k = (a_i, a_j) \in W$$

$$(M)_{k,i} = 0 \ otherwise.$$

The matrix $M$ then has $n_W$ rows and $n$ columns.
4. Using linear programming, find a vector $v$ of length $n$, such that
$Nv = 0, Mv < 0$, where the comparisons are performed by element.

The vector $v$ then contains ranking of each element of $G$, that is $(v)_i$ is the ranking of condition $a_i$.

The vector $v$ might not exists, which would indicate that the function $f$ has not been built correctly, and the training needs to be performed again.

Once the linear programming assignment submodule 162 has run, ranking completion verification 164 is run. In this step, it is verified whether all compared constraints have been ranked. If this is not the case, repeat constraints comparison 166 is performed. In other words, another attempt at ranking all of the constraints is run. If all of the constraints have been ranked, ranking quality control 168 is performed. If the quality is not satisfactory, the repeat constraints comparison submodule 166 can also be run. If the quality control 168 is successful, ranked constraints database can be generated from the obtained ranked constraints.

List of reference numerals

2 - Memory component

4 - User terminal

6 - Output terminal

10 - Processing component

12 - Harmonizing module

14 - Constraint analyzing module

16 - Sorting module

18 - Quality control module

22, 24, 26 - Databases

30 - Data relating to parking regulations

32 - Parking constraints

34 - Compared constraints

36 - Ranked constraints

40 - Ranked constraints database

142 - Input constraints

144 - Constraint pairing

146 - Unique constraint pairs

148 - Function building

160 - Input compared constraints

162 - Linear programming assignment

164 - Ranking completion verification

166 - Repeat constraints comparison

168 - Ranking quality control

1481 - Training pairs picked

1482 - Function estimation

1483 - Model run on all pairs

1484 - Pairs comparison completion verification

1485 - Training set increase

1486 - Comparison quality control

1487 - Function confirmation

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be the preferred order, but it may not be mandatory to carry out the steps in the recited order. That is, unless otherwise specified or unless clear to the skilled person, the order in which steps are recited may not be mandatory. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

**Claims**

1.  A method for analyzing parking regulations, the method comprising the steps of

    harmonizing data related to parking regulations via a data harmonization module to obtain a plurality of parking constraints;
    comparing the parking constraints via a constraint analyzing module to obtain a set of compared constraints; and
    sorting the compared constraints via a sorting module to obtain ranked constraints.

2.  The method according to the preceding claim wherein each parking constraint comprises geographical area data where it applies and wherein the comparing and sorting is performed at least in part based on the geographical area data where the constraints apply.

3.  The method according to any of the preceding claims wherein each parking constraint comprises at least one of the following

    a geometrical description of area where the constraint applies;

14

a time interval during which the constraint applies;
one or more days on which the constraint applies;
a type of constraint;
a source of constraint;
a category of constraint source; and
a unique ID associated with the constraint.

4. The method according to any of the preceding claims wherein comparing parking constraints is done pairwise and/or comprises outputting, for each pair of distinct parking constraints, one of a limited number of distinct outputs.

5. The method according to the preceding claim wherein the distinct outputs are indicative of the parking constraints' pairwise relationship and wherein the distinct outputs comprise

incompatibility between the two compared parking constraints;
a relative higher priority of a first compared parking constraint with respect to a second compared parking constraint;
a relative lower priority of a first compared parking constraint with respect to a second compared parking constraint; and
an equal priority of two compared parking constrains.

6. The method according to any of the preceding claims and with the features of claim 2 wherein comparing the constraints comprises determining whether there is intersection between the geographical areas where they apply.

7. The method according to any of the preceding claims and with the features of claim 4 wherein comparing the constraints further comprises running a machine learning algorithm on the parking constraints.

8. The method according to the preceding claim further comprising selecting a predetermined number of parking constraint pairs to train the machine learning algorithm.

9. The method according to the preceding claim further comprising testing the machine learning algorithm to determine whether the training set of constraint pairs allows for comparison of all of the constraints via the machine learning algorithm.

10. The method according to any of the preceding claims wherein the step of sorting the compared constraints comprises assigning a ranking to each constraint.

11. The method according to the preceding claim and with the features of claim 2 wherein the ranking is assigned between constraints with an intersection between their geographical areas.

12. A computer-implemented system configured for analyzing parking regulations, the system comprising

a memory component configured for storing at least data related to parking regulations; and
a processing component comprising

a harmonization module configured to output a plurality of parking constraints by harmonizing data related to parking regulations; and
a constraint analyzing module configured to output a set of compared constraints by comparing the parking constraints; and
a sorting module configured to output ranked constraints by sorting the compared constraints.

13. The system according to the preceding claim wherein each parking constraint comprises geographical area data where it applies and wherein the comparing and sorting is performed at least in part based on the geographical area data wherein the parking constraints apply.

14. The system according to any of the preceding system embodiments wherein each parking constraint comprises at least one of the following

a geometrical description of area where the constraint applies;

a time interval during which the constraint applies;
one or more days on which the constraint applies;
a type of constraint;
a source of constraint;
a category of constraint source; and
a unique ID associated with the constraint.

15. The system according to the preceding embodiment further comprising a user terminal and

wherein the user terminal is configured to communicate with the processing component; and
wherein the user terminal and the processing component are configured to exchange data related to parking permissibility at a specified geographic area.

**S1**
Harmonize data related to parking regulations to obtain a plurality of parking constraints

**S2**
Compare parking constraints to obtain a set of compared constraints

**S3**
Sort the compared constraints to obtain ranked constraints

Fig. 1

Fig. 2

Fig. 3

14

142 → 144 → 146 → 148

## Fig. 4

Unique pairs → Pick training pairs → Estimate f using ML → Run the model on all pairs

146   1481   1482   1483

Increase training set ← NO ← All pairs compared?   1484

1485   YES

NOT OK ← QA → OK → Function f

1486   1487

## Fig. 5

16

160

162

166

164

168

40

Fig. 6

Europäisches
Patentamt

European
Patent Office

Office européen
des brevets

# EUROPEAN SEARCH REPORT

Application Number

EP 20 21 2759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/191849 A1 (AGAM SHARON [IL] ET AL) 6 July 2017 (2017-07-06) * paragraphs [0030], [0047]; figures 1-9 * ----- | 1-15 | INV. G06Q10/00 G06Q50/26 G01C21/36 G06F16/29 |
| X | US 2018/150764 A1 (STENNETH LEON [US]) 31 May 2018 (2018-05-31) * paragraphs [0108] - [0109]; figures 1-2, 9-11 * ----- | 1-15 | |

TECHNICAL FIELDS
SEARCHED    (IPC)

G06Q
G01C
G06F

The present search report has been drawn up for all claims

| Place of search | Date of completion of the search | Examiner |
|---|---|---|
| Munich | 16 March 2021 | Heselius, Per |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 3 836 044 A1**

## ANNEX TO THE EUROPEAN SEARCH REPORT
## ON EUROPEAN PATENT APPLICATION NO.

EP 20 21 2759

16-03-2021

| Patent document cited in search report | Publication date | Patent family member(s) | Publication date |
|---|---|---|---|
| US 2017191849 A1 | 06-07-2017 | NONE | |
| US 2018150764 A1 | 31-05-2018 | NONE | |

EPO FORM P0459

For more details about this annex : see Official Journal of the European Patent Office, No. 12/82

**EP 3 836 044 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060106504 A1
- US 20110140927 A1